# EUROPEAN PATENT APPLICATION

(11) **EP 3 517 505 A1**
(43) Date of publication of application: **31.07.2019**
(21) Application number: 18159646.1
(22) Date of filing: 02.03.2018
(51) Int. Cl.: C02F 1/20, C02F 3/28, B01D 53/58, C02F 11/12, C02F 101/16, B01D 53/34

(54) **METHOD FOR TREATING MANURE**

(30) Priority: 25.01.2018 EP 18153481
(71) Applicant: FrieslandCampina Nederland B.V., 3818LE Amersfoort (NL)
(72) Inventor: VAN DER LINDEN, René, 6700 AE Wageningen (NL); VAN DER HEIJDEN, Petrus Cornelis, 6700 AE Wageningen (NL); VAN DER VEEN, Alle Arend, 6700 AE Wageningen (NL)
(74) Representative: FrieslandCampina Nederland B.V.

(57) **Abstract**

The invention relates to a process for treating animal manure, comprising
- providing a digestible animal manure composition;
- digesting the manure composition anaerobically, preferably at a temperature in the range of about 30 to about 45 °C, thereby forming a digestate and biogas;
- separating the digestate into a (semi-)solid fraction and a fluid aqueous fraction, said aqueous fraction;
- feeding the aqueous liquid fraction to an ammonia stripper wherein the aqueous liquid fraction is contacted at a temperature in the range of about 50 to about 95 °C, with a stripping gas and at least part of the ammonia is removed from the aqueous liquid fraction by the stripping gas
- treating the ammonia-containing stripping gas that has been contacted with the heated aqueous liquid fraction with an acidic aqueous solution in an ammonia washer, wherein an ammonium salt is formed; and
- collecting the ammonium salt.

## Description

The invention relates to a process for treating manure comprising an anaerobic digestion. The invention further relates to a system suitable for treating manure.

Anaerobic digestion of manure has gained a lot of interest. It is a promising technology to convert manure into valuable fertilizers containing organic solids, ammonia and/or phosphate thus creating circular flow of valuable components in farming. In addition it has the potential to reduce the potentially detrimental impact of green house gases from excess manure on the climate. Biodegradable components of manure are anaerobically digested to form biogas (a mixture of gases, of which methane and carbon dioxide are the major ones). The biogas is a known source for generating energy. One may collect manure from a plurality of livestock farms to a central plant for treating the manure. This allows large scale treatment and significant reductions in green house gas emissions. However, with suitable technology to digest the manure locally at or near the site where the manure has been produced, higher reductions would be feasible, possibly of about 50 % (from 0.06 to 0.09 kton carbon dioxide equivalent per kton manure; NIR 2014).

Manure typically comprises phosphorous (P) compounds and nitrogen (N) compounds. These are important nutrients for plant growth, but loss thereof via waste streams or evaporation has detrimental environmental impacts. Discarding waste streams with excess N or P compounds can contribute to eutrophication of the environment. Ammonia that escapes from the manure or digestate is a health hazard to humans and animals, in addition to being a contributor of acid rain.

Given the diversity of manure compositions (e.g. dependent on the animal which has produced the manure) and the diversity in needs/availability of energy and/or other means to treat manure (hardware, processing aids, like chemicals for treating manure or process streams, e.g. biogas or a stream downstream of the digester) and requirements for the product(s) and/or waste stream(s) obtained by the process there is a continuous need for alternative processes and systems.

It is an object of the present invention to provide a novel process that can serve as such an alternative. In particular, it is an object that allows anaerobic digestion of manure with a satisfactory reduction in greenhouse gas emission and ammonia emission with relatively simple equipment, that can be employed practically at a livestock farm.

One or more further objections that may be provided follow from the remainder of the description.

Accordingly, the present invention relates to a process for treating animal manure, comprising
- providing a digestible animal manure composition;
- digesting the manure composition anaerobically thereby forming a digestate and biogas;
- separating the digestate into a (semi-)solid fraction and a fluid aqueous fraction;
- feeding the aqueous liquid fraction to an ammonia stripper wherein it is contacted at a temperature in the range of about 50 to about 95 °C, with a stripping gas, typically air, and at least part of the ammonia is removed from the aqueous liquid fraction by the stripping gas;
- treating the ammonia-containing stripping gas that has been contacted with the heated aqueous liquid fraction with an acidic aqueous solution in an ammonia washer, wherein an ammonium salt is formed .; and
- collecting the ammonium salt.

It has been found possible with such a process not only to reduce emission of greenhouse gases, but also to reduce emission of nitrogen, in particular ammonia. The present process does not require strong alkaline conditions to remove ammonia from the aqueous liquid fraction. Thus, there is no need to add a base to the aqueous fluid fraction in order to increase the pH to strong alkaline conditions. This is not only advantageous because it reduces the need for chemicals, such as sodium hydroxide, in the treatment process but it also simplifies the process, facilitating implementation at or near, e.g. a livestock farm. The invention allows a high level of heat integration. Generally all heat needed for carrying out a process according to the invention can be provided by energy produced in situ, in particular by generating energy from biogas. Typically, biogas is converted into heat and electricity, whereby the generated heat can be used to heat one or more process streams. The process generally produces an excess of energy (electricity and optionally heat).

Thus, a process according to the invention allows efficient treatment of manure.

A process according to the invention is in particular a good alternative for mono-digestion of manure, compared to known processes. Mono-digestion is generally known in the art to be a digestion process wherein the material to be digested that is fed in anaerobic reactor essentially consists of manure. A small amount of another carbon source, such as an alcohol (e.g. methanol, glycerol), a triglyceride (e.g. vegetable oil) or a plant (waste) material, e.g. grass, silage (e.g. maize), tail material (e.g. beet tail) can be co-fed, typically maximally 5 wt.%. If desired one may also add a carbonate to the manure. Carbonate increases the pH buffer capacity of the manure or fractions further down-stream of the process. The digestable animal manure composition typically comprises 95-100 wt.%, preferably 98-100 wt. % manure.

The invention further relates to a manure treatment installation comprising
- an anaerobic reactor for digesting manure, comprising a manure inlet, which is typically connectable to a manure vault or a manure silo, a digestate outlet, a biogas outlet which is connected to a generator for creating energy from biogas, in particular a cogenerator;
- a separator for separating the digestate into a (semi-)solid fraction and a liquid fraction, in particular a screw press, the separator having an inlet for the digestate, an outlet for the first fraction and an outlet for the second fraction;
- a heating system for heating the second fraction from the separator , which heating system is preferably adapted to use heat generated in the cogenerator (directly or indirectly e.g. use heat from a liquid effluent of the ammonia stripper) and has an inlet for the second fraction from the separator connected to the outlet for liquid fraction from said separator;
- an ammonia stripper having an inlet for the heated second fraction connected to said outlet of the heating system, an outlet for liquid from which ammonia has been stripped, an inlet for stripping gas and an outlet for stripping gas;
- an ammonia washer having an inlet for stripping gas connected to the outlet for stripping gas of the ammonia stripper, an outlet for washed stripping gas, an inlet for acidic aqueous solution and an outlet for used acidic washing liquid.

The invention further relates to the use of a process or installation according to the invention for the production of one or more of the following: biogas, energy (e.g. electricity and/or heat); (semi-)solid manure, which is preferably enriched in phosphorous, compared to the manure before treatment; and ammonium salt, in particular ammonium sulphate or ammonium nitrate, which are suitable salts for fertilizing applications.
Figure 1 schematically shows an example of a first part of a process/installation according to the invention. It shows schematically how manure can be fed to the digester, wherein biogas and digestate is formed.
Figure 2 shows the second part of the process/installation, wherein the equipment for separating the digestate into at least two fractions is shown and equipment for further treatment of the fractions, as further explained below.
Figure 3 schematically shows an installation used for the Examples.
Figure 4 shows results of one of the Examples with respect to ammonia removal efficiencies as function of the temperature of liquid effluent from the ammonia stripper (which effluent is used to heat the aqueous liquid fraction from the separator that is fed into the stripper).
Figure 5 shows results of one of the Examples with respect to ammonia removal efficiencies as function of stripping gas discharge flow (bleed) from the ammonia scrubber.

For the purpose of clarity and a concise description features are described herein as part of the same or separate embodiments, however, it will be appreciated that the scope of the invention may include embodiments having combinations of all or some of the features described.

Unless defined otherwise, all technical and scientific terms used herein have the same meaning as commonly understood by one of ordinary skill in the art.

As used herein, the term 'pH' is used for the apparent pH, i.e., the pH measured with a standard H+ electrode, at 25 °C. The pH is measured by inserting a calibrated pH electrode in the medium, such as manure or an aqueous solution, of which the pH is to be measured.

The term "or" as used herein means "and/or" unless specified otherwise.

The term "a" or "an" as used herein means "at least one" unless specified otherwise.

The term "essential(ly)" or "substantial(ly) is generally used herein to indicate that it has the general character or function of that which is specified. When referring to a quantifiable feature, this term is generally used to indicate that it is more than 75 %, in particular more than 90 %, more in particular more than 95 %, even more in particular more than 98 % of the maximum of that feature. The term 'essentially free' is generally used herein to indicate that a substance is not present (below the detection limit achievable with analytical methods as available on the effective filing date) or present in such a low amount that it does not significantly affect the property of the product that is essentially free of said substance or that it is present in such a low amount (trace) that it does not need to be labelled on the packaged product that is essentially free of the substance. In practice, in quantitative terms, a product is usually considered essentially free of a substance, if the content of the substance is 0 - 0.1 wt.%, in particular
0 - 0.01 wt.%, more in particular 0 - 0.005 wt.%, based on total weight of the product in which it is present.

The term "about" in relation to a value generally includes a range around that value as will be understood by the skilled person. In particular, the range is from at least 10 % below to at least 10 % above the value, more specifically from 5 % below to 5 % above the value.

When referring to a "noun" (e.g., a compound, an additive etc.) in singular, the plural is meant to be included, unless specified otherwise.

A substance is solid or semi-solid if it has the ability to support its own weight and hold its shape (i.e. is dimension stable) if no external pressure of shear force is applied (other than gravity). A semi-solid also shares some properties of fluids such as conforming in shape to something applying pressure to it and the ability to flow under pressure. The term semi-solid is generally used in the art for manure that is dimension stable, in particular such that it can be shoveled without the manure flowing off the shovel (in Dutch ' steekvast').

In principle any type of animal manure can be used for digestion in a process or installation according to the invention, e.g. bovine manure, poultry manure, pig manure, horse manure, sheep manure or goat manure. Preferably the manure is bovine manure, in particular cow manure. In a further advantageous embodiment or is a mixture of bovine manure and manure of one or more other animals. In such embodiment, bovine manure is preferably a major component, providing 50 wt. % more of the weight of the manure.

In an advantageous embodiment, the inlet for manure of a digester wherein digestion takes place is connected with a manure vault or another manure container, such as manure silo, from which the manure is pumped into the anaerobic digester.

Digesting the manure can be done using equipment known per se, e.g. an anaerobic tank reactor under conditions known per se. E.g. pH can be about the natural pH of the manure, usually in the range of about 7-9, in particular in the range of about 7.5-8.7, e.g. in the range of 8.0-8.5. The digester is typically a closed reactor, so as to avoid loss of biogas or emissions of other volatiles. Anaerobic bacteria capable of converting biodegradable organic material into biogas are generally present in manure. The digestion conditions can be based on conditions known per se, with the proviso that the digesting typically is carried out at a temperature in the range of about 30 to about 45 °C. Under such temperature conditions (mesophilic conditions, employing mesophilic microorganisms), particularly good results have been achieved. Preferably, the temperature is at least 37 °C, In a particular preferred embodiment, the temperature is 42-44 °C. If desired one may also carry out the digestion at a temperature above 45 °C, e.g. at a temperature in the range of 50-75 °C. Under such conditions, thermophilic microorganisms can be used.

In an embodiment, the digester is operated under batch conditions. In a preferred embodiment the digestion is performed in a semi-continuous manner. In this embodiment, manure composition is typically fed to the digester intermittently and the digestate is removed intermittently (a so called 'feed and bleed' principle). Intervals between subsequent feed and remove steps are not critical. In practice they are usually at least 1 hour, e.g. 6 hours to 7 days or more. In this embodiment inlet for the manure composition and outlet for the digestate are preferably at a relatively large distance from each other, e.g. inlet for manure composition in a lower part of the digester, e.g. at or near the bottom and the digestate at our near (yet below) the interface between headspace (a gas phase) and the manure composition/digestate. The digester may be agitated continuously or intermittently. It is also possible to operate without substantial agitation.

The (average) residence time in the digester during which digestion takes place usually is at least 10 days, preferably at least 15 days, more preferably at least 25 days. Generally, the (average) residence time is about 50 days or less Usually a residence time of about 40 days or less is sufficient to provide the digestate.

In the digester, biogas is produced by the anaerobic activity in the manure composition. Further, usually ammonia is formed from organic nitrogen compounds present in the manure. The biogas is recovered and used to generate energy. This energy (or part thereof) is used to add heat to the process. In general, energy from the biogas is used for heating the manure composition that is being digested (if needed). Further, energy from biogas is generally used to heat the liquid fraction (to be) treated in the ammonia stripper. Usually, more biogas is produced than is needed for providing heat in a process according to the invention. Accordingly, a process according to the invention is a net supplier of energy. In view thereof, it is advantageous to generate energy from the biogas by cogeneration, whereby heat and electricity are formed. The heat can be used to add energy into the process, and optionally for heating facilities nearby an installation wherein the process is carried out. Electricity can also be used in facilities nearby or supplied to a larger electricity network (such as an electricity grid). The use of cogeneration to convert biogas into energy (electricity and heat) has been found particularly advantageous in terms of efficiency for a relatively small scale process or installation, a process carried out on or an installation adapted for a single livestock farm. In particular, a small scale process or installation, is a process/installation, wherein the anaerobic digester has a volume of about 300 to about 2000 m³ and/or wherein the processing capacity downstream of the digesting step/digester is less than about 3 tons digestate per hour, more in particular about 0.5 to about 1.5 tons per hour.

The formed digestate is separated into into a (semi-)solid fraction (having an increased solids content compared to the digestate) and a fluid aqueous fraction (having a decreased solids content compared to the digestate. Particularly good results have been achieved with a screw press.

In practice the (semi-)solid fraction obtained in a process according to the invention has a solids content of at least about 10 wt.%, preferably at least 15 wt.%. The solids content is usually about 40 wt.% or less, preferably 35 wt.% or less. Thus, usually the water content is in the range of about 60 wt.% to about 90 wt.%. Advantageously the water content is about 65 to about 85 wt.%. It usually has an increased phosphorus content compared to the digestate and a decreased nitrogen content. It generally comprises fibrous material. It can be lumpy or grainy in consistency, whereby it is well spreadable.

The fluid aqueous fraction generally still contains suspended and dissolved solids. Compared to the manure before treatment, the fluid aqueous fraction typically has a significant reduced phosphorous content. In particular it has been found possible to reduce the phosphorous content by about 30 % or more. Preferably the reduction is at least 35 %, e.g. 40-50%.
In particular, ammonia is also generally present in a high concentration in the digestate, and in the aqueous fraction obtained in the separator. The inventors have found that the ammonia content in the fluid aqueous fraction can be reduced considerably by a specific treatment. This treatment also allows recovery of the ammonia in a form that can be used for fertilizing applications. This treatment comprises the stripping of ammonia from the fluid aqueous fraction using a stripping gas, such as air, at elevated temperature, namely a temperature in the range of 50-95 °C, preferably in the range of 70-90 C, more preferably a temperature in the range of 75-85 C. This treatment is typically carried out at an about neutral pH. In particular, the pH of the aqueous fluid subjected to ammonia stripping is in the range of 6.5-8.5, preferably of 7.0-8.0. Accordingly, the stripping is advantageously carried out without using an added alkaline to bring the equilibrium between NH₄⁺ and NH₃ in the fluid phase to the volatile NH₃ side, needed to allow a high removal degree from the fluid.

The aqueous fluid fraction generally contains a substantial amount of carbon dioxide/carbonate. This is a component of the digestate. The anaerobic micro-organisms convert a carbon source partially into methane, partially into carbon dioxide . The presence of carbon dioxide/carbonate is advantageous downstream of the process, as it contributes to the buffering capacity of the aqueous fluid, avoiding the pH from become so low that the equilibrium between NH₄⁺ and NH₃ shifts too far to the NH₄⁺ side. Preferably, the content of CO₂ (including carbonate forms) in the aqueous fraction subjected to stripping is at least 150 mmol/l, more preferably at least 200 mmol/l. If needed, carbonate (e.g. hydrogen carbonate) can be added to the aqueous fluid before or during being subjected to stripping. The content of CO₂ (including carbonate forms) may be up to its saturation point. Usually the content of CO₂ (including carbonate forms) is about 500 mmol/l or less, preferably 400 mmol/l or less.

Dependent on the temperature at which has been digested and the environmental temperature, the aqueous fluid fraction typically has a temperature in the range of about 30-40 °C (unless digestion has taken place under thermophilic conditions, in which case the temperature can be higher). Thus, generally the aqueous fraction is heated before being introduced into the stripper to the desired stripping temperature or to a temperature closer to the desired stripping temperature. In an advantageous process according to the invention the aqueous fraction fed into the ammonia stripper is heated to a temperature in the range of 50-95 °C using energy that is obtained from the biogas by cogeneration. Such energy can be directly obtained from the co-generator e.g. heat in the form of water that has been heated in the co-generator and exchanged with the aqueous fluid. However, it is also possible to use heat from another stream that has been heated with energy from the cogenerator. In a preferred embodiment, for this heating a heat exchanger is used, wherein heat from aqueous fluid that has been treated in the ammonium stripper is transferred to aqueous fluid that is yet to be treated in the stripper. If needed, further energy from biogas can be used.

Any further heating is usually accomplished in the stripper by contacting it with heated stripping gas. E.g. in an example, in the aqueous fraction to be fed into the stripper is heated to about 70 °C by aqueous fraction that has left the stripper and further heated to about 80 °C by hot stripping gas. The use of stripping gas to heat the aqueous fluid has been found particularly advantageous.

The ammonia stripper can be a system known per se. Typically the aqueous fluid phase and the stripping gas, such as air, are contacted in countercurrent, with the aqueous fluid phase moving downward and the stripping gas moving upward. The mass to mass ratio aqueous fluid phase to stripping gas usually 10: 1 or less, preferably 5:1 or less, more preferably about 3:1 or less. The mass to mass ratio aqueous fluid phase to stripping gas usually is at least about 1: 1, preferably about 1.5:1 or more, in particular about 2:1 or more.

The digesting in combination with the stripping in accordance with the invention has been found surprisingly effective. It has been found possible to remove about 50 % or more of the nitrogen compared to nitrogen in the manure before treatment.

The stripping gas leaving the stripper, that contains ammonia is treating the ammonia-containing stripping gas with an acidic aqueous solution in an ammonia washer, wherein an ammonium salt is formed. The acidic aqueous solution typically has a pH of about 5 or less. The pH usually is 3 or more, in particular 4.0-5.0. The regenerated stripping gas can be used again for stripping. The ammonium salt is a useful product. Preferably the acidic solution is a sulphuric acid solution or a nitric acid solution. The ammonia salts thereof (ammonium sulphate respectively ammonium nitrate) are particularly suitable for use as (part of) a fertilizer. The salts can be recovered in a manner known per se. However, it is also possible to use acidic solutions of one or more other inorganic or organic acids. In general, the used acid should have a pKa of 4 or less.

The acidic aqueous solution in the ammonia washer usually has a temperature in the range of 50-95 °C, preferably in the range of 70-90 °C, more preferably 75-85 °C. Heating can be done with energy obtained from the biogas, advantageously by cogeneration. The temperature is usually about the same as for the stripping gas in the ammonia stripper. Thus, the acidic aqueous liquid also acts as a heating medium for the stripping gas (which in turn also acts as a heating medium for the aqueous fluid in the stripper, unless it already is at at least the same temperature as the stripping gas). This way of heating has been chosen because this significantly reduces fouling of the heat exchanger typically used for exchanging heat between aqueous fluid feed for the ammonium stripper and treated aqueous fluid from the stripper, compared to a process wherein all heat is supplied via the heat exchanger. Further, the risk of detrimental water condensation is reduced. Furthermore heating the stripping air via the aqueous acidic solution allows to increase the stripping gas volume flow, which improves efficacy.

In a preferred process according to the invention, stripping gas is recirculated from the ammonium washer to the stripper via a recirculation loop comprising a discharge for stripping gas downstream of the ammonium washer, whereby stripping gas comprising carbon dioxide is discharged. This allows for a control of pH and temperature. By discharging stripping gas, carbon dioxide is removed from the system, which increases pH. Discharging stripping gas, means also discharging heat, whereby temperature is reduced. Discharging stripping gas is also referred to as 'stripping gas bleed'.

As mentioned above, the invention also relates to a manure treatment installation. The installation is suitable for employing a process according the invention. Thus, it comprises the means for carrying out such process, and preferably the means are present for carrying out a preferred according to the invention.

In a particularly preferred embodiment, the installation comprises a heating system for the acidic aqueous solution, which system is adapted to use heat generated from energy that is obtained by cogeneration from the biogas (which is also used for generating electricity in the cogeneration process).

In a particularly preferred embodiment, the installation is provided with a stripping gas recirculation loop comprising a discharge for stripping gas downstream of the ammonium washer.

Advantageously, the reactor comprises a temperature control system for maintaining the contents of the reactor at a temperature in the range of 30-45 °C, preferably a system adapted to use energy created from the biogas by cogeneration.

Further, the invention relates to a livestock farm having a manure vault, a manure silo or another manure container, of which a manure outlet is connected to a manure inlet of an anaerobic reactor of an installation according to the invention.

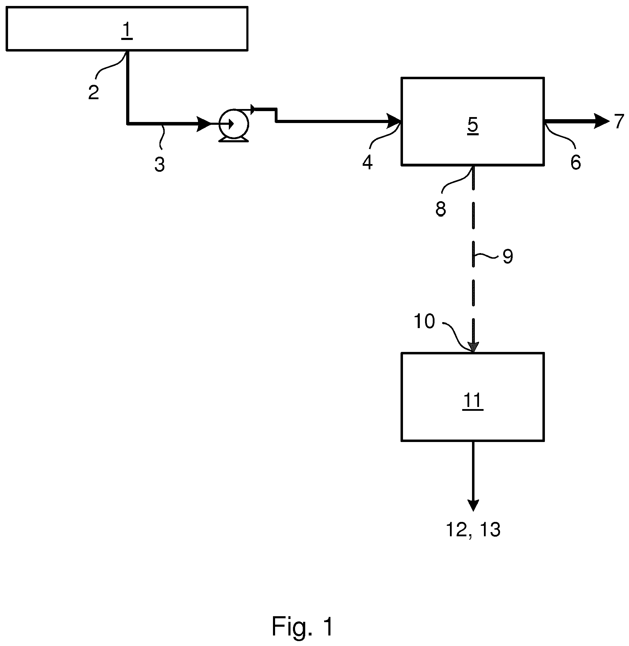

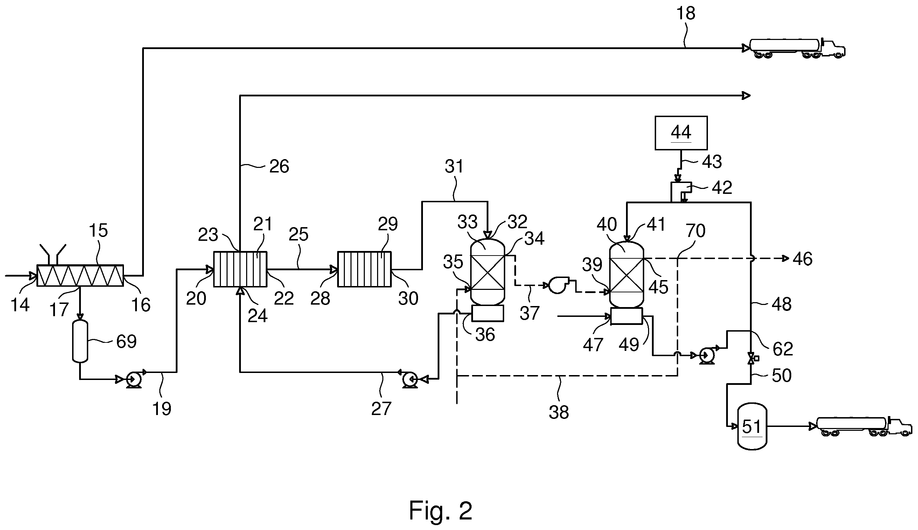

Next a detailed description of Figures 1-3 will be given which schematically show embodiments of the invention. Figure 1 schematically shows an example of a first part of a process/installation according to the invention. It shows schematically how manure can be fed to the digester **5,** wherein biogas and digestate is formed. The digester **5** comprises a manure inlet **4,** which is typically connected to the outlet **2** of manure container **1,** such as a manure vault or manure silo, via manure conduit **3.** The digester **5** has a digestate outlet **6** and a biogas outlet **8.** The biogas outlet is connected to a biogas inlet **10** of a cogenerator **11** via biogas conduit **9.** The cogenerator **11** is adapted to generate heat **(12)** and electricity **(13).** The digestate outlet **6** is connected with the separator **15,** preferably a screw press, shown in Figure 2 (Left side) via a digestate conduit **7.** Energy, in particular heat **(12),** from the cogenerator **11** can be used to maintain the temperature in the digester **5** at a temperature of choice, and for heating a process stream further downstream (Figure 2), as further explained below.

Figure 2 shows the second part of the process/installation. The separator **15** for separating digestate into a (semi-)solid fraction and a liquid fraction in the separator **15** is herein shown as a screw press, which is a particularly preferred separator. The separator **15** has an inlet **14** for the digestate, an outlet **16** for the (semi-)solid fraction **(18)** and an outlet **17** for the liquid fraction. Optionally, a collection vessel **69** is present for collecting the liquid fraction.

During use, the liquid fraction contains a high amount of ammonia which needs to be stripped from the solution. Stripping takes place at elevated temperatures in the range of about 50-95 °C. Thus, the outlet **17** for the liquid fraction is connected to the inlet **20** of a heat exchanger **21** via a conduit **19,** for heating the liquid fraction. Optionally, there is a collection vessel **69** present for collecting the liquid fraction. The heat exchanger also has an outlet **22** and a conduit **25** for the heated liquid fraction, an outlet **23,** connected to conduit **26** for the liquid effluent and an inlet **24** for the treated liquid fraction (from which ammonia has been stripped). If desired a second heat exchanger **29** is present, wherein during use the heated liquid fraction from conduit **25** can be further heated. It comprises an inlet **28** for the pre-heated liquid fraction from the first heat exchanger **21** and an outlet **30** for the heated liquid fraction. The installation is provided with ammonia stripper **33,** which has an inlet **32** connected to conduit **31** through which heated liquid fraction enters the ammonia stripper **33** during use. The ammonia stripper **33** has an outlet **34** for gaseous ammonia, an inlet **35** for stripped gas and an outlet **36** for the treated liquid phase that is stripped from ammonia. This outlet **36** is connected via conduit **27** to the inlet **24** to reenter the first heat exchanger **21.** Outlet **34** is connected via conduit **37** to inlet **39** of the ammonia scrubber **40,** for washing with an acidic aqueous solution. The ammonia scrubber **40** comprises an outlet **45** for the treated gas, optionally connected to a valve **70,** which enables regulation of the amount of treated gas reentering the ammonia stripper **33** via conduit **38,** or being discharged via the gas discharge **46** (see example 2). The ammonia scrubber **40** additionally comprises an inlet **47** for a washing liquid in which ammonia can be dissolved (typically water which is acidified downstream or has been acidified), an outlet **49** for liquid and an inlet **41** for an acidic solution connected via conduit **48,** provided with an acid dosage system **42** to add acid to liquid in conduit **48** (from tank **44** via supply line **43).** Outlet **49** is connected to conduit **50** for a liquid. The liquid can be reentered into ammonia scrubber **40** via inlet **41,** for further scrubbing the stripping gas, to remove ammonia from it. The design of Figure 2 is particularly suitable for operating the scrubbing using a ' feed and bleed' principle. During use, the washing liquid can be recycled a number of times. If desired, typically once the ammonia concentration has become higher than desired for scrubbing the stripping gas, the liquid (typically a concentrated ammonia salt solution) can be removed from the installation via conduit **50** and bifurcation **62,** and can be stored into storage unit **51,** until transportation, e.g. to a facility wherein ammonium salt, such as ammonium sulphate, is recovered from said liquid.

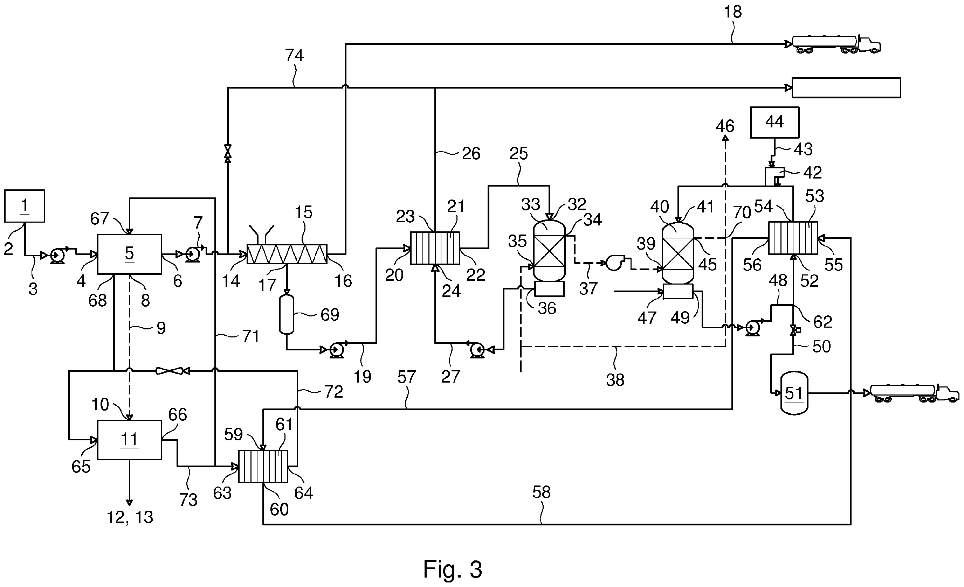

Figure 3 schematically shows an installation used for the Examples. The Figure largely corresponds to the corresponding parts of Figures 1 and 2, to which is referred in as far as parts of the Figure are not described here. It shows how manure **3** can be fed to the digester 5, wherein biogas and digestate is formed. The digester **5** comprises a manure inlet **4,** which is typically connected to the outlet **2** of a manure vault or manure silo **1,** a digestate outlet **6** and a biogas outlet **8,** which is connected to the inlet **10** of a cogenerator **11** via conduit 9. The cogenerator **11** is adapted to generate heat **12** and electricity **13.** Heat **12** generated in the cogenerator **11** can, during use, be used to maintain the temperature in digester **5** and heat up the temperature of the solution in conduit **48,** to dissolve the gaseous ammonia, as described below. Thus, the cogenerator additionally comprises an outlet **66** connected to both inlet **67** of the digester **5** via conduit **71** and inlet **63** of heat exchanger **61** via conduit **73** and an inlet **65** connected to outlets **68** of digester **5** and **64** of heat exchanger **61** via conduit **72,** respectively. Heat exchanger **61** is provided to heat liquid phase to be used in the ammonia washer **40,** as described below.

During use, digestate enters the separator **15** via conduit **7** and inlet **14** and is separated into a (semi-)solid fraction **(18)** and a liquid fraction in the separator **15,** herein shown as a screw press. Optionally a by-pass **74** is present between digester **5** and separator **15,** via which digestate can be discarded, e.g. during maintenance of the installation further down-stream.. The separator **15** has an inlet **14** for the digestate, an outlet **16** for the (semi-)solid fraction **(18)** and an outlet **17** for the liquid fraction. The outlet **17** of the liquid fraction is connected to the inlet **20** of a heat exchanger **21,** via conduit **19.** Optionally, the liquid fraction can be stored in collection vessel **69.** The heat exchanger **21** also having an outlet **22** for the heated liquid fraction (during use flowing through conduit **25),** an outlet **23** for removal of liquid effluent from the installation via conduit **26** and an inlet **24** for the treated liquid fraction connected to outlet **36** via conduit **27.** The heated fraction can enter ammonia stripper **33** via an inlet **32,** for removing the ammonia from the liquid phase. The ammonia stripper **33** has an outlet **34** for gaseous ammonia, an inlet **35** for stripped gas and an outlet **36** for the liquid phase that is stripped from ammonia. Outlet **34** is connected to inlet **39** from ammonia washer **40** via conduit **37.** During use, the temperature of the acidic solution is usually in the range of about 50-95 °C and can be heated with heat generated by cogenerator **11.** Therefore, heat exchanger **53,** comprises an inlet **55** and an outlet **56** for heating medium, which is connected to the outlet **60** and inlet **59** of heat exchanger **61,** via conduits **57** and **58** respectively. Heat exchanger **53** also comprises an outlet **54** that is connected to an inlet **41** of ammonia scrubber **40** and an inlet **52** for a liquid from conduit **48.**

The invention will now be illustrated by the following examples.

### Example 1

Bovine manure was treated in accordance with the invention using an installation as schematically shown in Figure 3. The digestion took place by mono-digestion in a stirred tank reactor operated under anaerobic conditions at a temperature of about 40 °C with an average residence time of about 30 days. Produced biogas was used to generate electricity and heat (hot water). The heat was used for heating scrubbing fluid for the ammonia scrubber (hot water from the cogenerator was used to heat a further water stream in heat exchanger 0, which further water stream was used to heat scrubbing fluid in heat exchanger 2, see Figure 3). Digestate from the anaerobic reactor was separated into a (semi-)solid fraction and a liquid fraction in a screw press.

The liquid fraction was fed into the ammonia stripper via a first heat exchanger (21 in Figure 3). Where applicable it was heated using effluent from the ammonia stripper (at a temperature in the range of 65-85 °C). The stripper was a column packed with Pall rings. The column had a packing height of 2.5 m. The pH of the liquid in the stripper was in the range of 7.4-7.8 (achieved by stripping gas bleeding rate adjustment, as needed, see below).

End temperature of the liquid in the stripper was varied to study the effect of the temperature on ammonia removal efficiency. The ammonia scrubber was operated at a pH of 5

Table 1 shows a typical composition of various streams in the process. Table 2 shows preferred experimental conditions .

**Table 1: Composition**

| | | Manure | Digestate | Solid fraction | Liquid fraction | Stripper effluent |
|---|---|---|---|---|---|---|
| Total solids | g/kg | 94 | 69 | 359 | 43 | 45 |
| Organic solids | g/kg | 74 | 50 | 306 | 27 | 28 |
| N-tot | g/kg | 4,26 | 4,38 | 8,27 | 4 | 1,78 |
| ammonium | g/kg | 1,86 | 2,35 | 1,86 | 2,32 | 0,19 |
| P-tot | g/kg | 1,58 | 1,55 | 6,34 | 1,17 | 1,13 |
| K* | g/kg | 6,2 | 6,4 | 5 | 6,5 | 6,6 |
| Mg* | g/kg | 1,4 | 1,3 | 4,8 | 1 | 1 |
| Na* | g/kg | 1,4 | 1,5 | 1,3 | 1,4 | 1,5 |

| | | | | | | |
|---|---|---|---|---|---|---|
| * K, Mg, and Na amounts are expressed as their oxides (K₂O, MgO, Na₂O) | | | | | | |

**Table 2: Preferred Experimental conditions**

| **Parameter** | **Unit** | **Low** | **High** |
|---|---|---|---|
| **Feed into stripper:** | | | |
| Ammonium | g/l | 2,1 | 2,5 |
| pH of feed | - | 7,4 | 7,8 |
| Feed temperature | °C | 65 | 85 |
| Feed flow | l/h | 500 | 700 |
| | | | |
| **Air flow into stripper** | m3/h | 1800 | 2100 |
| | | | |
| **Opening air bleed valve** | **%** | **0** | **50** |

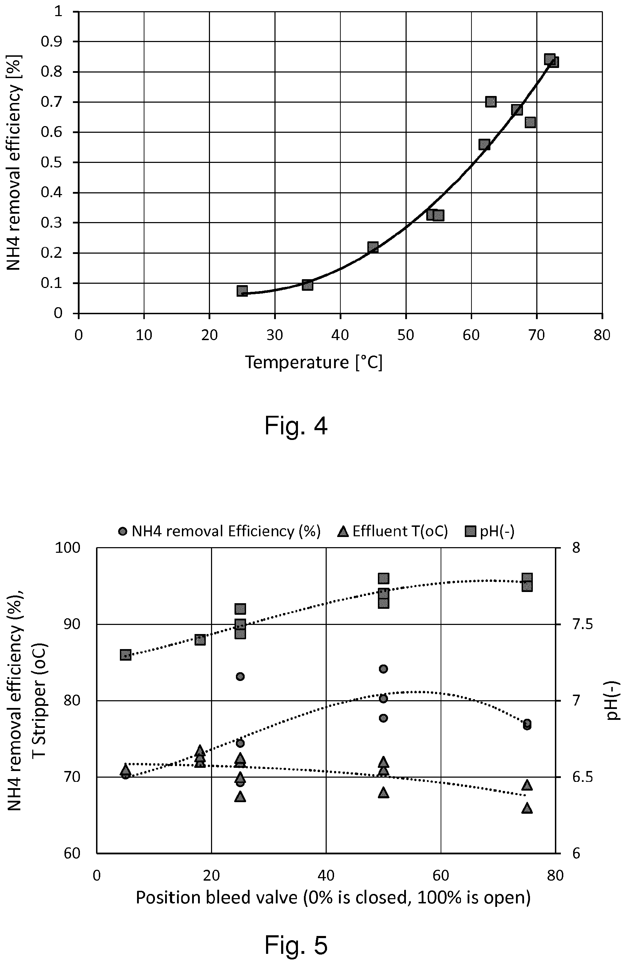

As shown in Figure 4, the temperature inside the stripper has a large effect on removal efficiency of ammonia from the aqueous liquid fraction obtained from the separator..

Figure 4 illustrates that a method according to the invention allows a large reduction in ammonia and total nitrogen from manure and from the liquid fraction of manure obtained in a solid-liquid separator, such as a screw press, in a manner that allows the nitrogen to be recovered and be used e.g. in the production of fertilizer. This is accomplished without needing strong alkaline conditions, so there is no need for using a strong base . Further, all energy needed can be generated in situ, from biogas.

### Example 2

The effect of the stripping gas discharge flow relative to the recirculation flow was studied. The method was based on the method described in Example 1, with a feed temperature of the liquid fraction into the ammonia stripper of about 70 °C (see Figure 5).. The temperature of the liquid effluent varied around 70 °C (see Figure 5). There was a minor effect on the liquid effluent temperature as a function of the percentage of bleed, relative to the recirculation flow. Increasing the bleed percentage had also an effect on pH. The increase in pH at increased bleed percentage can be understood from the discharge of carbon dioxide from the system.. It was further found that the percentage of bleed flow can be used to improve the ammonia removal efficiency from the stripping gas (*i. c.* air) in the scrubber. Upon increasing the air bleed, NH4 removal efficiencies starts to increase to a certain moment where the effect of temperature decrease is larger than the increase in pH. Results are shown in Figure 2. Table 3 shows the manually measured bleed flows at different Bleed valve positions.

**Table 3: Measured Air flow as function of the bleed valve position**

| **Position bleed valve** | **Bleed flow (m3/h)** | % **Bleed of recirculation flow** |
|---|---|---|
| 25% | 25 | 1,4% |
| 50% | 70 | 3,8% |
| 100% | 100 | 5,5% |

As illustrated in Figure 5, in this Example best results were obtained with a percentage of bleed flow corresponding to the bleed valve being open for 25-75 %).

## Claims

1. Process for treating animal manure, comprising
- providing a digestible animal manure composition;
- digesting the manure composition anaerobically, preferably at a temperature in the range of about 30 to about 45 °C, thereby forming a digestate and biogas;
- separating the digestate into a (semi-)solid fraction and a fluid aqueous fraction, said aqueous fraction;
- feeding the aqueous liquid fraction to an ammonia stripper wherein the aqueous liquid fraction is contacted at a temperature in the range of about 50 to about 95 °C, with a stripping gas and at least part of the ammonia is removed from the aqueous liquid fraction by the stripping gas
- treating the ammonia-containing stripping gas that has been contacted with the heated aqueous liquid fraction with an acidic aqueous solution in an ammonia washer, wherein an ammonium salt is formed; and
- collecting the ammonium salt.

2. Process according to claim 1, wherein the digestate is separated into a semi-solid fraction having a water content of 65-85 wt.% and a fluid aqueous fraction comprising suspended and dissolved solids in water.

3. Process according to claim 1 or 2, wherein said separation of the digestate is done using a screw press.

4. Process according to any of the preceding claims, wherein the ammonia-containing stripping gas is fed to a lower section of an ammonia washer and is passed upwardly while being contacted with a downwardly streaming solution of the acidic aqueous solution.

5. Process according to any of the preceding claims, wherein the heated liquid phase fed into the ammonia stripper has a pH in the range of 6.5-8.5, preferably 7.0-8.0.

6. Process according to any of the preceding claims, wherein the acidic aqueous solution comprises sulphuric acid and/or nitric acid and wherein ammonium sulphate and/or ammonium nitrate are formed.

7. Process according to any of the preceding claims, wherein the manure is pumped from a manure vault or manure silo into an anaerobic digester, wherein the digestate and the biogas are formed.

8. Process according to any of the preceding claims wherein the manure composition comprises 95-100 wt.% animal manure and 0- 5 wt.% of one or more further carbon sources for generating biogas, such as one or more components selected from the group consisting of alcohols (e.g. methanol or glycerol), vegetable oils and plant materials (e.g. maize silage, grass, beet tails).

9. Process according to any of the preceding claims, wherein the aqueous fraction subjected to ammonia stripping comprises at least 150 mmol/l carbon dioxide (including carbonate), preferably 200 - 400 mmol/l.

10. Process according to any of the preceding claims wherein the acidic aqueous solution is heated to a temperature in the range of 50-95 °C, using heat generated from energy that is obtained by cogeneration from the biogas.

11. Process according to any of the preceding claims, wherein stripping gas is recirculated from the ammonium washer to the stripper via a recirculation loop comprising a discharge for stripping gas downstream of the ammonium washer, whereby stripping gas comprising carbon dioxide is discharged.

12. Process according to any of the preceding claims, wherein said aqueous fraction is heated to a temperature in the range of 50-95 °C using energy that is obtained by cogeneration from the biogas.

13. Manure treatment installation comprising
- an anaerobic reactor for digesting manure, comprising a manure inlet, which is connectable to a manure vault or a manure silo, a digestate outlet, a biogas outlet which is connected to a cogenerator for creating energy from biogas;
- a separator for separating the digestate into a (semi-)solid fraction and a liquid fraction, in particular a screw press, the separator having an inlet for the digestate, an outlet for the first fraction and an outlet for the second fraction;
- a heating system for heating the second fraction from the separator , which heating system is adapted to use heat generated in the cogenerator and has an inlet for the second fraction from the separator connected to the outlet for liquid fraction from said separator;
- an ammonia stripper having an inlet for the heated second fraction connected to said outlet of the heating system, an outlet for liquid from which ammonia has been stripped, an inlet for stripping gas and an outlet for stripping gas
- an ammonia washer having an inlet for stripping gas connected to the outlet for stripping gas of the ammonia stripper, an outlet for washed stripping gas, an inlet for acidic aqueous solution and an outlet for used acidic washing liquid.

14. Installation according to claim 13, comprising a heating system for the acidic aqueous solution, which system is adapted to use heat generated from energy that is obtained by cogeneration from the biogas.

15. Installation according to claim 13 or 14, wherein stripping gas recirculation loop is provided comprising a discharge for stripping gas downstream of the ammonium washer.

16. Installation according to claim 13, 14 or 15, wherein the reactor comprises a temperature control system for maintaining the contents of the reactor at a temperature in the range of 30-45 C, preferably a system adapted to use energy created from the biogas by cogeneration.

17. Livestock farm having a manure vault or a manure silo, of which a manure outlet is connected to a manure inlet of an anaerobic reactor of an installation according to any of the claims 13-16.

18. Use of a process or installation according to any of the claims 1-12 or an installation according to any of the claims 13-16 for the production of one or more of the following: biogas, energy; (semi-)solid manure, which is preferably enriched in phosphorous, compared to the manure before treatment; and ammonium salt, in particular ammonium sulphate or ammonium nitrate.
